# EUROPEAN PATENT APPLICATION

(11) **EP 4 424 164 A1**
(43) Date of publication of application: **04.09.2024**
(21) Application number: 22886725.5
(22) Date of filing: 13.10.2022
(51) Int. Cl.: A01N 35/02, A01N 27/00, A01P 7/04, A01P 17/00, A01P 19/00

(54) **ANT CONTROL AGENT AND ANT CONTROL METHOD**

(30) Priority: 29.10.2021 JP 2021178122
(71) Applicant: SHIN-ETSU CHEMICAL CO., LTD., Tokyo 1000005 (JP)
(72) Inventor: SUGAWARA, Yuma, Joetsu-shi, Niigata 942-8601 (JP); MIYAKE, Yuki, Joetsu-shi, Niigata 942-8601 (JP); WATANABE, Takeru, Joetsu-shi, Niigata 942-8601 (JP); KUTSUWADA, Yasuhiko, Joetsu-shi, Niigata 942-8601 (JP)
(74) Representative: Cabinet Nony
(86) International application number: PCT/JP2022/038236
(87) International publication number: WO 2023/074396

(57) **Abstract**

Provided are agents and methods for controlling an ant belonging to Myrmicinae, thereby reducing the number of ants in a colony. More specifically, provided are a composition including at least one alarm pheromone compound contained in an alarm pheromone composition of an ant belonging to Myrmicinae and at least one hydrocarbon compound having 19 to 50 carbon atoms and being physiologically active on the ant; an agent for controlling the ant, the agent including the composition and a container containing or a carrier carrying the composition; a method for controlling the ant by using the agent; an agent for controlling an ant, the agent including at least one compound for inducing an attack by an ant belonging to Myrmicinae on the same species or repelling the ant, and a container containing or a carrier carrying the compound; and a method for controlling the ant by using the agent.

## Description

### Technical Field

The invention relates to an agent for controlling an ant and a method for controlling an ant.

### Background Art

Myrmicinae includes fire ant (Solenopsis spp.), leaf cutting ant, and Myrmica spp. For example, the fire ant has emerged into countries around the world and become a problem as a sanitary insect pest. The leaf cutting ant is an important forest insect pest and cuts down eucalyptus leaves in North, Central and South America, including the United States, Mexico, Brazil and Argentina. In addition, the Myrmica spp. has become a problem as a sanitary insect pest in Europe.

There have been reported, as a method for controlling an ant belonging to the Myrmicinae, a method by Kennard comprising a step of spraying an insecticide (Non-Patent Document 1) and a method by Hughes et al. using a combination of a bait agent and an insecticide (Non-Patent Document 2). There has been reported, as a method for controlling an ant belonging to not Myrmicinae but Dolichoderinae, a method using a nestmate recognition pheromone (Patent Document 1).

### Prior Art Document

### Patent Document

Patent Document 1: JP 2012-250938A

### Non-Patent Document

Non-Patent Document 1: C.P. Kennard, Experimental Agriculture 1965,1(3), 237-240
Non-Patent Document 2: W.O.H. Hughes et al., Bulletin of Entomological Research, 2002, 92(3), 213-218

### Summary of the Invention

### Problem to be solved by the Invention

However, since the ant control methods by Kennard and Hughes et al. involve use of a large amount of pesticide so that they are undesirable from the viewpoint of pesticide residues and environmental aspects. The ant control method described in Patent Document 1 in which a nestmate recognition pheromone alone for inducing repelling is applied to Argentina ants of Dolichoderinae, is insufficient for reducing the number of ants or protecting a plant. For the above reasons, it has been desired to develop a method for reducing the number of ants or protecting a plant by a physiological control method without using an insecticide. The invention has been made under the above circumstances. An object of the invention is to provide an agent and a method and others for controlling an ant by using a compound physiologically active on the ant belonging to the Myrmicinae, or by using a physiologically active composition containing said compound, to reduce the number of ants in a colony.

### Solution to the Problem

As a result of intensive studies to achieve the above object, the inventors have found, with respect to an ant belonging to the Myrmicinae, that the number of ants in the colony can be reduced, for example, by bringing an ant into contact with a physiologically active compound for inducing repelling (panic) or an attack on the same species, or a physiologically active composition containing said compound, so as to induce repelling or an attack on the same species. Thus, the invention has been made. It has also been found, with respect to an ant belonging to the Myrmicinae, that a plant can be protected and the number of ants in the colony can be reduced by using an alarm pheromone compound of the ant belonging to the Myrmicinae or a hydrocarbon compound having 19 to 50 carbon atoms, and thus the invention has been made.

In one aspect of the invention, there is provided a composition comprising at least one alarm pheromone compound contained in an alarm pheromone composition of an ant belonging to Myrmicinae, and at least one hydrocarbon compound having 19 to 50 carbon atoms and being physiologically active on the ant.

In another aspect of the invention, there are provided an agent for controlling an ant belonging to Myrmicinae, the agent comprising said composition and a container containing said composition or a carrier carrying said composition; and a method for controlling the ant by using said agent.

In still another aspect of the invention, there are provided an agent for controlling an ant, the agent comprising at least one compound for inducing an attack by an ant belonging to Myrmicinae on the same species or repelling the ant, and a container containing the compound or a carrier carrying the compound; and a method for controlling the ant by using said agent.

### Effect of the Invention

According to the invention, there can be provided a composition physiologically active on an ant belonging to the Myrmicinae, and an agent for effectively controlling an ant belonging to the Myrmicinae. In addition, by using said agent, a plant can be protected from an ant belonging to the Myrmicinae without using an insecticide imposing a large environmental load. Furthermore, by using said agent, the number of ants in the colony can be reduced so that this species can be directly controlled.

### Brief Description of Drawings

Fig. 1 shows the number of ants gathering at an odor source in Example 1.
Fig. 2 shows the comparison between the section treated with 3-octanone and the control section in Example 2.
Fig. 3 shows the comparison between the section treated with liquid paraffin and the control area in Example 3.

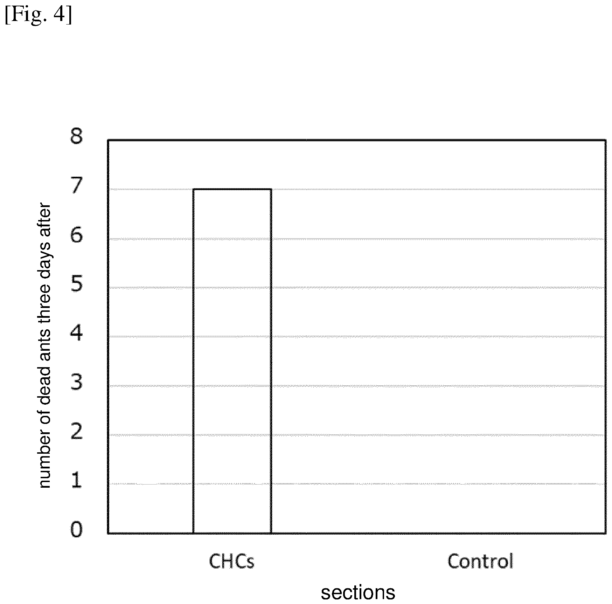

Fig. 4 shows the comparison between the section treated with liquid paraffin and (9Z)-9-nonacosene and the control section in Example 4.
Fig. 5 shows the olfactometer used in the bioassay.
Fig. 6 shows the test apparatus used in Example 4.

### Mode for Carrying Out the Invention

An ant belonging to Myrmicinae can be controlled by using a compound physiologically active on the ant or by using a composition containing the compound, wherein the compound induces repelling (panic) or an attack on the same species. For example, the number of ants belonging to the Myrmicinae in a colony can be reduced by bringing ants into contact with a compound or a composition containing the compound, wherein the compound induces an attack on the same species. In addition, the number of ants belonging to the Myrmicinae in a colony can be reduced by installing a compound or a composition containing the compound around the colony, wherein the compound induces repelling to inhibit foraging behaviors of ants.

Examples of the physiologically active compound include at least one compound (hereinafter also referred to as "alarm pheromone") contained in an alarm pheromone composition of ant, and at least one hydrocarbon compound having 19 to 50 carbon atoms contained in a hydrocarbon composition present on the body surface of ant.

Examples of the compound for inducing an attack by an ant belonging to Myrmicinae on the same species include at least one alarm pheromone compound (hereinafter, also referred to as "alarm pheromone") contained in the alarm pheromone composition of the ant, and at least one hydrocarbon compound having 19 to 50 carbon atoms and being physiologically active on the ant. Examples of the latter include at least one hydrocarbon compound having 19 to 50 carbon atoms contained in a hydrocarbon composition present on the body surface of the ant, and a hydrocarbon compound having 19 to 50 carbon atoms which is not present on the body surface of the ant but has the same function as that of the hydrocarbon compound present on the body surface of the ant. Hereinafter, at least one hydrocarbon compound having 19 to 50 carbon atoms contained in a hydrocarbon composition present on the body surface of the ant will be selected as an example and explained. At least one alarm pheromone compound induces an ant belonging to the Myrmicinae to be attracted to or an attack on an alarm pheromone compound source. Thus, when an ant is brought into contact with the alarm pheromone compound, another ant is induced to attack on the ant. An ant belonging to the Myrmicinae distinguishes the nestmate in the same colony from the non-nestmate in the other colony by recognizing the component ratio of the hydrocarbon composition on the body surface, and then makes an attack on and exhibits exclusionary behaviors toward the ant in the other colony. Accordingly, when an ant is brought into contact with a hydrocarbon compound to change the component ratio of the hydrocarbon composition on the body surface of the ant, the ant will be attacked by another ant. The at least one alarm pheromone compound and the at least one hydrocarbon compound may be compounds extracted from an ant belonging to the Myrmicinae, but preferably compounds produced by synthesis from the viewpoint of productivity.

The contact includes not only the physical contact between the antennae of an insect and a chemical substance but also the detection of a signal through the antennae or the like of an insect exposed to the chemical substance. In other words, if a chemical substance physiologically active on an ant belonging to the Myrmicinae for inducing, for example, attraction, repelling or an attack on the same species, is sustainedly released, and an ant belonging to the Myrmicinae detects a signal of the physiologically active chemical substance and takes action, then the action is also included by the action by contact.

An ant belonging to the Myrmicinae takes on a different behavior such as attraction, attack, and repelling (panic), depending on a concentration of the alarm pheromone compound. In other words, when the concentration of the alarm pheromone compound is low, it acts as a signal of attraction and attack, and when the concentration is high, it acts as a signal of repelling.

The concentration serving as an attraction and attack signal and the concentration serving as a repelling signal can be confirmed by, for example, a biological activity test using an olfactometer. As a specific method, an alarm pheromone solution (i.e., an alarm pheromone in a diluent) as an odor source is attached to a cotton swab or the like as a carrier in a fixed amount (about 50 µl) and placed in an odor source installation adapter. An insect separation chamber in which a twig with the alarm pheromone carrier is placed is considered as a treated area, and an insect separation chamber in which a twig with a cotton swab soaked with an equal amount of water is placed is considered as a control area. Subsequently, 10 working ants were introduced into a central arena connected with each insect separation chamber, and allowed to have the exploratory activity for about 5 minutes, while flowing pure air at a flow rate of about 0.3 L/min. After completion of the test, the number of ants in each insect separation chamber having a twig therein is counted, and the number of ants in the treated area is compared with the number of ants of the control area. When the concentration of the alarm pheromone to be carried by the carrier in the insect separation chamber (i.e., the treated area) is gradually reduced, the concentration of the alarm pheromone carried by the carrier at the time when the number of ants in the treated area becomes larger than that in control area is the critical concentration at which repelling is changed to attraction.

First, a compound which induces an attack on the same species will be specifically described. The compound which induces an attack on the same species is at least one alarm pheromone compound of an ant belonging to the Myrmicinae or at least one hydrocarbon compound having 19 to 50 carbon atoms. Examples of the alarm pheromone compound include a ketone compound having 7 to 11 carbon atoms and an alcohol compound having 7 to 11 carbon atoms.

Examples of the ketone compound having 7 to 11 carbon atoms include a linear ketone compound such as 2-heptanone, 3-heptanone, 4-heptanone, 2-octanone, 3-octanone, 4-octanone, 2-nonanone, 3-nonanone, 4-nonanone, 5-nonanone, 2-decanone, 3-decanone, 4-decanone, 5-decanone, 2-undecanone, 3-undecanone, 4-undecanone, 5-undecanone, 6-undecanone, 1-hepten-3-one, 1-octen-3-one, 1-nonen-3-one and 3,5-dimethyloctanone; and a branched ketone compound such as 3-methyl-2-hexanone, 4-methyl-2-hexanone, 5-methyl-2-hexanone, 2-methyl-3-hexanone, 4-methyl-3-hexanone, 5-methyl-3-hexanone, 3-methyl-2-heptanone, 4-methyl-2-heptanone, 5-methyl-2-heptanone, 6-methyl-2-heptanone, 2-methyl-3-heptanone, 4-methyl-3-heptanone, 5-methyl-3-heptanone, 6-methyl-3-heptanone, 2-methyl-4-heptanone, 3-methyl-4-heptanone, 3-methyl-2-octanone, 4-methyl-2-octanone, 5-methyl-2-octanone, 6-methyl-2-octanone, 7-methyl-2-octanone, 2-methyl-3-octanone, 4-methyl-3-octanone, 5-methyl-3-octanone, 6-methyl-3-octanone, 7-methyl-3-octanone, 2-methyl-4-octanone, 3-methyl-4-octanone, 3-methyl-2-nonanone, 4-methyl-2-nonanone, 5-methyl-2-nonanone, 6-methyl-2-nonanone, 7-methyl-2-nonanone, 8-methyl-2-nonanone, 2-methyl-3-nonanone, 4-methyl-3-nonanone, 5-methyl-3-nonanone, 6-methyl-3-nonanone, 7-methyl-3-nonanone, 8-methyl-3-nonanone, 2-methyl-4-nonanone, 3-methyl-4-nonanone, 4-methyl-4-nonanone, 5-methyl-4-nonanone, 6-methyl-4-nonanone, 7-methyl-4-nonanone, 8-methyl-4-nonanone, 2-methyl-5-nonanone, 3-methyl-5-nonanone, 4-methyl-5-nonanone, 3-methyl-2-decanone, 4-methyl-2-decanone, 5-methyl-2-decanone, 6-methyl-2-decanone, 7-methyl-2-decanone, 8-methyl-2-decanone, 9-methyl-2-decanone, 2-methyl-3-decanone, 4-methyl-3-decanone, 5-methyl-3-decanone, 6-methyl-3-decanone, 7-methyl-3-decanone, 8-methyl-3-decanone, 9-methyl-3-decanone, 2-methyl-4-decanone, 3-methyl-4-decanone, 5-methyl-4-decanone, 6-methyl-4-decanone, 7-methyl-4-decanone, 8-methyl-4-decanone, 9-methyl-4-decanone, 2-methyl-5-decanone, 3-methyl-5-decanone, 4-methyl-5-decanone, 6-methyl-5-decanone, 7-methyl-5-decanone, 8-methyl-5-decanone, 9-methyl-5-decanone, 4,6-dimethyl-4-octen-3-one.

Among these examples, preferable are 2-heptanone, 3-octanone, 2-nonanone, 3-nonanone, 2-undecanone, 4-methyl-3-heptanone, 5-methyl-3-heptanone, 4-methyl-3-hexanone, 6-methyl-3-octanone, 1-octen-3-one and 3,5-dimethyloctanone, which are alarm pheromone compounds of leaf cutting ant and Myrmica spp., each belonging to the Myrmicinae, and more preferable are 3-octanone and 4-methyl-3-heptanone. Many species belong to leaf cutting ant and Myrmica spp. as shown in Tables 1 and 2 to be mentioned later. Among all of said many species, 3-octanone and/or 4-methyl-3-heptanone are particularly preferable with respect to the leaf cutting ant, and 3-octanone is particularly preferable with respect to the Myrmica spp.

Examples of the alcohol compound having 7 to 11 carbon atoms include a linear alcohol compound such as 1-heptanol, 2-heptanol, 3-heptanol, 4-heptanol, 1-octanol, 2-octanol, 3-octanol, 4-octanol, 1-nonanol, 2-nonanol, 3-nonanol, 4-nonanol, 5-nonanol, 1-decanol, 2-decanol, 3-decanol, 4-decanol, 5-decanol, 1-undecanol, 2-undecanol, 3-undecanol, 4-undecanol, 5-undecanol, 6-undecanol, 1-hepten-3-ol, 1-octen-3-ol and 1-nonen-3-ol; and a branched alcohol compound such as 2-methyl-1-hexanol, 3-methyl-1-hexanol, 4-methyl-1-hexanol, 5-methyl-1-hexanol, 3-methyl-2-hexanol, 4-methyl-2-hexanol, 5-methyl-1-hexanol, 5-methyl-2-hexanol, 2-methyl-3-hexanol, 4-methyl-3-hexanol, 5-methyl-3-hexanol, 2-ethyl-1-hexanol, 2-ethyl-3-hexanol, 2-ethyl-4-hexanol, 2-ethyl-5-hexanol, 2-methyl-1-heptanol, 3-methyl-1-heptanol, 4-methyl-1-heptanol, 5-methyl-1-heptanol, 6-methyl-1-heptanol, 3-methyl-2-heptanol, 4-methyl-2-heptanol, 5-methyl-2-heptanol, 6-methyl-2-heptanol, 2-methyl-3-heptanol, 4-methyl-3-heptanol, 5-methyl-3-heptanol, 6-methyl-3-heptanol, 2-methyl-4-heptanol, 3-methyl-4-heptanol, 2-methyl-1-octanol, 3-methyl-1-octanol, 4-methyl-1-octanol, 5-methyl-1-octanol, 6-methyl-1-octanol, 7-methyl-1-octanol, 3-methyl-2-octanol, 4-methyl-2-octanol, 5-methyl-2-octanol, 6-methyl-2-octanol, 7-methyl-2-octanol, 2-methyl-3-octanol, 4-methyl-3-octanol, 5-methyl-3-octanol, 6-methyl-3-octanol, 7-methyl-3-octanol, 2-methyl-4-octanol, 3-methyl-4-octanol, 2-methyl-1-nonanol, 3-methyl-1-nonanol, 4-methyl-1-nonanol, 5-methyl-1-nonanol, 6-methyl-1-nonanol, 7-methyl-1-nonanol,8-methyl-1-nonanol, 3-methyl-2-nonanol, 4-methyl-2-nonanol, 5-methyl-2-nonanol, 6-methyl-2-nonanol, 7-methyl-2-nonanol, 8-methyl-2-nonanol, 2-methyl-3-nonanol, 4-methyl-3-nonanol, 5-methyl-3-nonanol, 6-methyl-3-nonanol, 7-methyl-3-nonanol, 8-methyl-3-nonanol, 2-methyl-4-nonanol, 3-methyl-4-nonanol, 4-methyl-4-nonanol, 5-methyl-4-nonanol, 6-methyl-4-nonanol, 7-methyl-4-nonanol, 8-methyl-4-nonanol, 2-methyl-5-nonanol, 3-methyl-5-nonanol, 4-methyl-5-nonanol, 2-methyl-1-decanol, 3-methyl-1-decanol, 4-methyl-1-decanol, 5-methyl-1-decanol, 6-methyl-1-decanol, 7-methyl-1-decanol, 8-methyl-1-decanol, 9-methyl-1-decanol, 3-methyl-2-decanol, 4-methyl-2-decanol, 5-methyl-2-decanol, 6-methyl-2-decanol, 7-methyl-2-decanol, 8-methyl-2-decanol, 9-methyl-2-decanol, 2-methyl-3-decanol, 4-methyl-3-decanol, 5-methyl-3-decanol, 6-methyl-3-decanol, 7-methyl-3-decanol, 8-methyl-3-decanol, 9-methyl-3-decanol, 2-methyl-4-decanol, 3-methyl-4-decanol, 5-methyl-4-decanol, 6-methyl-4-decanol, 7-methyl-4-decanol, 8-methyl-4-decanol, 9-methyl-4-decanol, 2-methyl-5-decanol, 3-methyl-5-decanol, 4-methyl-5-decanol, 6-methyl-5-decanol, 7-methyl-5-decanol, 8-methyl-5-decanol, 9-methyl-5-decanol and 4,6-dimethyl-4-octen-3-ol.

Among these examples, preferable are 3-octanol, nonanol, 4-methyl-3-heptanol, 2-ethyl-1-hexanol and 1-octen-3-ol, which are alarm pheromone compounds of leaf cutting ant and Myrmica spp., each belonging to the Myrmicinae.

A candidate compound for the alarm pheromone compound of ant can be determined by extracting an extract from the mandibular gland of ant with hexane and analyzing the extract by gas chromatography-mass spectrometry (GC-MS). In order to determine which compounds identified in the extract from the mandibular gland have warning pheromone activities, compounds which are identified to be consistently present in the extract from the mandibular gland of the ant species of interest are tested by using the Mandible Opening Response (MOR) assay. The MOR assay is a method of judging the response to a particular chemical stimulus while restricting the movement of the working ant, and the response is judged by determining whether the subject ant opens the mandible after being exposed to the stimulus. As a more specific method, an ant is cooled on ice, then the head of the ant is allowed to pass through a 0.2ml pipette tip having its apex cut, and fixed with a thin masking tape to prepare a harness. The ant is allowed to be left for acclimatization for 2 hours prior to the experiment, and also allowed to be left for at least 30 minutes between chemical stimulation to prevent the ant from acclimatizing to stimulus. Each compound for stimulation is applied in random order. In order to measure the response by the ant to an alarm pheromone, 20 µl of compound is added dropwise onto a filter paper (10x2 mm) 10 mm away from the antennae of the ant of interest, and the response by the ant is recorded. Similarly, the test in which dropwise addition of 20 µl of water is carried out is assigned as a negative control, and the test in which the head of another ant of the same species, immediately after freezing to death, is crushed and then used, is assigned as a positive control. The test is carried out sequentially for each compound, and the compound in which the the Mandibular Open Response (MOR) is observed is considered to have a physiological activity as an alarm pheromone.

Examples of the hydrocarbon compound having 19 to 50 carbon atoms include nonadecane, icosane, henicosane, docosane, tricosane, tetracosane, pentacosane, hexacosane, heptacosane, octacosane, nonacosane, triacontane, hentriacontane, dotriacontane, tritriacontane, tetratriacontane, pentatriacontane, hexatriacontane, heptatriacontane, octatriacontane, nonatriacontane, tetracontane, hentetracontane, dotetracontane, tritetracontane, tetratetracontane, pentatetracontane, hexatetracontane, heptatetracontane, octatetracontane, nonatetracontane and pentacontane. One or some of the hydrogen atoms of these hydrocarbon compounds may be substituted with a methyl group or the like, and one or some of the carbon-carbon single bonds of these hydrocarbon compounds may be replaced by a carbon-carbon double bond or a carbon-carbon triple bond.

Among these hydrocarbon compounds, hydrocarbon compounds present on the body surfaces of the leaf cutting ant and Myrmica spp., which belong to the Myrmicinae, are desirable.

For example, regarding Atta sexdens belonging to leaf cutting ant, it is preferable to use one or more hydrocarbon compounds selected from the group consisting of (9Z)-9-nonadecene, pentacosane, hexacosane, heptacosane, nonacosane, hentriacontane, 9-methyltriacontane, 9-methylhentriacontane, 7,11-dimethyltriacontane, tritriacontane, 3,7,11-trimethyltriacontane, 9-methyldotriacontane, 3,5-dimethylhentriacontane, 9-methyltritriacontane, 3,7,11-trimethylhentriacontane, 4,8,12-trimethyldotriaconane, 3,7,11-trimethyldotriacontane, 3,7,11-trimethyltritriacontane, 4,8,12-trimethyltritriacontane, 3,7,11-trimethyltetratriacontane, 4,8,12-trimethyltetratriacontane, 3,7,11-trimethylpentatriacontane, 4,8,12-trimethylpentatriacontane, 4,8,12-trimethylhexatriacontane and 7,11-dimethylnonatriacontane. The hydrocarbon compound is not limited to the above examples because its examples include one or more hydrocarbon compounds which have not been identified.

As a method for selecting a hydrocarbon compound having 19 to 50 carbon atoms, the hydrocarbons on the body surface of the colony individual (i.e., ant) to be controlled may be extracted with hexane, the components of the extract may be analyzed by GC-MS or the like, and such a hydrocarbon compound or compounds may be selected as to allow the addition of the selected hydrocarbon compound or compounds to make the component ratio of the hydrocarbon composition on the body surface of the individual differ from the original component ratio on the body surface.

Incidentally, the leaf cutting ant, which belongs to the Myrmicinae, uses an alarm pheromone compound also as a chemical substance for distinguishing the same colony individual from the different colony individual. Accordingly, just using an alarm pheromone compound alone of an ant belonging to the Myrmicinae as a compound that induces an attack on the same species, there can be induced killing each other.

The at least one alarm pheromone compound and the at least one hydrocarbon compound having 19 to 50 carbon atoms may be used in combination. When combined, the mixing ratio is not particularly limited. For example, the ratio of (total mass of the alarm pheromone compound)/(total mass of the hydrocarbon compound having 19 to 50 carbon atoms) is from 100:0 to 0:100, and more preferably from 99.9:0.1 to 0.1:99.9.

The alarm pheromone compound and the hydrocarbon compound having 19 to 50 carbon atoms are preferably artificially synthesized compounds from an economic viewpoint. The alarm pheromone compound and the hydrocarbon compound having 19 to 50 carbon atoms may contain impurities that are unavoidable for their production processes.

A compound physiologically active on an ant belonging to the Myrmicinae for inducing repelling or an attack on the same species, may be used together with an additive. Examples of the additive include an antioxidant such as 2,6-di-tert-buty-4-methylphenol (BHT), butylhydroxytoluene, butylhydroxyanisole, hydroquinone and vitamin E; and a UV absorber such as 2-hydroxy-4-octyloxybenzophenone, 2-(2'-hydroxy-3'-tert-butyl-5'-methylphenyl)-5-chlorobenzotriazole (HBMCBT). When the compound physiologically active on an ant belonging to the Myrmicinae for inducing repelling or an attack on the same species is contained by an agent for controlling the ant, the additive may be released or exposed together with the physiologically active compound such as an alarm pheromone compound and/or a hydrocarbon compound having 19 to 50 carbon atoms, or may remain without being released or exposed.

Regarding an amount of the additive relative to an amount of the compound(s) physiologically active on an ant belonging to the Myrmicinae, for example, an amount of the antioxidant is preferably from 0 to 50% by mass, more preferably from 0 to 20% by mass, and an amount of the ultraviolet absorber is preferably from 0 to 50% by mass, more preferably from 0 to 20% by mass, relative to a total amount of the at least one alarm pheromone compound and the at least one hydrocarbon compound having 19 to 50 carbon atoms. The total amount means a total amount of both the alarm pheromone compound(s) and the hydrocarbon compound(s) when both of them are present. It means a total amount of the alarm pheromone compound(s) in the absence of the hydrocarbon compound, and a total amount of the hydrocarbon compound(s) in the absence of the alarm pheromone compound.

Next, there will be described an ant control agent comprising at least one compound physiologically active on an ant belonging to the Myrmicinae for inducing repelling or an attack on the same species, and a container containing the compound or a carrier carrying the compound.

The ant control agent is not particularly limited as long as it contains a compound physiologically active on an ant belonging to the Myrmicinae. Examples of the control agent include a non-sustained release agent and a sustained release agent. It is preferably a sustained release agent from the viewpoint of the control effect.

Regarding the non-sustained release agent, the material of the container is preferably a material allowing the container to be decomposed in the colony of an ant belonging to the Myrmicinae and release the compound physiologically active on an ant belonging to the Myrmicinae. A biodegradable plastic container such as a polylactic acid container, a polycaprolactone cotainer, a polyhydroxyalkanoate container and a cellulose container is preferable. The biodegradable plastic container can gradually degrade in the colony and release, for example, a compound for inducing an attack on the same species, in the colony at a stage where the degradation has progressed to a certain extent.

Examples of the sustained release agent includes a sustained release agent comprising a carrier impregnated with a compound physiologically active on an ant belonging to the Myrmicinae; a sustained release agent comprising a container such as a cap, a tube, a capsule, a bead, an ampoule, a can or a bag, containing a compound physiologically active on an ant belonging to the Myrmicinae; and a sustained release agent in the form of a hydrogel.

The sustained release agent can release a small amount of an active ingredient which is a compound physiologically active on an ant belonging to the Myrmicinae, from a container at regular intervals or at irregular intervals. Examples of the sustained release agent include a rubber septum agent, a reservoir type agent, a matrix agent, an aerosol agent and a duster type agent. Herein, the active ingredient such as a compound that induces an attack on the same species may be released out of the container, regardless of whether the active ingredient is automatically or manually released from the container.

A sustained release agent for controlling an ant belonging to the Myrmicinae may comprise a carrier or container for sustainedly releasing a compound physiologically active on the ant belonging to the Myrmicinae.

A sustained release agent comprising a physiologically active compound and a carrier may be produced by a well-known method such as kneading or impregnation for introducing the compound into a carrier. The shape and size of the carrier are variable depending on the type and amount of application. For example, a manual installation agent comprising a ring-shaped carrier may have a ring diameter of preferably from 0.01 to 5 m, and a duster type agent comprising a particulate carrier having a spherical or elliptical shape may have a particle diameter (a major axis in the case of an ellipse) of preferably from 0.01 to 10 cm. The amount of the physiologically active compound carried on the carrier is variable depending on the type and amount of application. It is preferably from 0.01 mg to 100 g, more preferably from 1 mg to 10 g, per agent.

The sustained release agent comprising a physiologically active compound and a container may be produced by a well-known method such as a method comprising steps of injecting a compound physiologically active on an ant belonging to the Myrmicinae into a polymer tube, and sealing both ends of the tube; or a method comprising steps of filling a can with a compound physiologically active on an ant belonging to the Myrmicinae, and attaching a valve for spraying the compound from the can.

The sustained release agent comprising a container may further comprise an optional diluent. Examples of the diluent include hydrocarbon compounds such as hexane, heptane, octane, nonane, decane and toluene; esters such as ethyl acetate and n-butyl acetate; ketones such as acetone and methyl ethyl ketone; ethers such as diethyl ether and dibutyl ether; nitriles such as acetonitrile and propionitrile; aprotic polar solvents such as N,N-dimethylformamide; mineral oils such as kerosene, liquid paraffin, amber oil and creosote oil; vegetable oils such as castor oil, linseed oil, salad oil, corn oil, soybean oil, sesame oil, rapeseed oil, safflower oil, sunflower oil, palm oil, olive oil, peanut oil, almond oil, grape seed oil, jojoba oil, rose hip oil, avocado oil, hazelnut oil and orange oil; animal oils such as fish oil, lanolin oil, squalane oil, egg yolk oil, liver oil, horse oil and mink oil; and synthetic oils such as ester oil.

An amount of the optional diluent to be added is preferably from 0 to 10,000 parts by mass relative to 100 parts by mass of the total amount of the at least one alarm pheromone compound and the at least one hydrocarbon compound having 19 to 50 carbon atoms, which are compounds for inducing an attack on the same species. The total amount means the total amount of both the alarm pheromone compound(s) and the hydrocarbon compound(s) when both of them are present. The total amount means a total amount of the alarm pheromone compound(s) in the absence of the hydrocarbon compound, and the total amount means a total amount of the hydrocarbon compound(s) in the absence of the alarm pheromone compound.

The sustained release agent comprising a container may further comprise an optional surfactant. The surfactant may be used, for example, when at least one alarm pheromone compound and at least one hydrocarbon compound having 19 to 50 carbon atoms, each having different solubility, are used in combination.

A natural surfactant or a synthetic surfactant may be used as the surfactant. Examples of the surfactant include an anionic surfactant, a cationic surfactant, an amphoteric surfactant and a nonionic surfactant.

Examples of the anionic surfactant include fatty acid salts such as sodium oleate, potassium oleate, sodium laurate and potassium laurate; alkylbenzenesulfonate salts such as sodium methylbenzenesulfonate, potassium methylbenzenesulfonate, sodium ethylbenzenesulfonate and potassium ethylbenzenesulfonate; alpha-sulfo fatty acid methyl ester salts such as α-sulfo fatty acid methyl ester sodium salt and α-sulfo fatty acid methyl ester potassium salt; alpha-olefinsulfonates such as sodium α-olefinsulfonate and potassium α-olefinsulfonate; naphthalenesulfonates such as sodium naphthalenesulfonate and potassium naphthalenesulfonate; dialkylsulfosuccinates such as sodium dimethylsulfosuccinate, potassium dimethylsulfosuccinate, sodium diethylsulfosuccinate and potassium diethylsulfosuccinate; alkylsulfates such as sodium octylsulfate, potassium octylsulfate, sodium dodecylsulfate and potassium dodecyl sulfate; polyoxyethylene alkyl ether sulfates; and phosphates such as sodium phosphate and potassium phosphate.

Examples of the cationic surfactant include aliphatic amine salts, aliphatic quaternary ammonium salts, heterocyclic quaternary ammonium salts, and aromatic quaternary ammonium salts.

Examples of the amphoteric surfactant include betaine-type amphoteric surfactants such as lauryldimethylbetaine; fatty acid amidopropyl betaine-type amphoteric surfactants; carboxymethylamine-type amphoteric surfactants such as laurylaminodiacetate; imidazolinium-type amphoteric surfactants; and phospholipids such as lecithin.

Examples of the nonionic surfactant include sorbitan ester surfactants; polyoxyethylene sorbitan fatty acid ester surfactants such as Tween20; glycerin ester surfactants; polyoxyalkylene alkyl phenyl ether surfactants such as Triton X-100, Triton X-114, Nonidet P-40 and Igepal CA-630; polyoxyalkylene alkyl ether surfactants such as sec-alcohol ethoxylate; polyoxyalkylene fatty acid ester surfactants; and glycosides such as saponin.

An amount of the surfactant to be added is preferably from 0 to 10,000 parts by mass relative to 100 parts by mass of the total amount of the at least one alarm pheromone compound and the at least one hydrocarbon compound having 19 to 50 carbon atoms, as the compound for inducing an attack on the same species. The total amount means a total amount of both the alarm pheromone compound(s) and the hydrocarbon compound(s) when both of them are present. It means a total amount of the alarm pheromone compound(s) in the absence of the hydrocarbon compound (s). It means a total amount of the hydrocarbon compound(s) in the absence of the alarm pheromone compound(s).

The sustained release agent comprising a can as a container further comprises a propellant. Examples of the propellant include liquefied petroleum gas such as propane, propylene, n-butane and isobutane; liquefied gas such as dimethyl ether (hereinafter also referred to as "DME"); halogenated carbon gas such as HFC-152a, HFC-134a, HFO-1234yf and HFO-1234ze; carbon dioxide gas; nitrogen gas; and compressed gas such as compressed air. The propellant may be used singly or in combination of two or more.

A mass ratio of a total amount of at least one compound physiologically active on an ant belonging to the Myrmicinae for inducing an attack on the same species (e.g., an alarm pheromone compound and/or a hydrocarbon compound having 19 to 50 carbon atoms), the above-mentioned additive and diluent to an amount of the propellant is preferably from 80:20 to 10:90 from the viewpoint of the control effect.

An amount of the propellant in the sustained release agent comprising a can as a container is preferably from 0.01 mg to 500 g, more preferably from 1 mg to 200 g, from the viewpoint of the control effect.

The sustained release agent comprising a tubular container is particularly preferable because the period of releasing, for example, the alarm pheromone compound and/or the hydrocarbon compound having 19 to 50 carbon atoms is long and the release rate is constant. The inner diameter of the tubular container is preferably from 0.01 to 5.0 mm, and the wall thickness thereof is preferably from 0.05 to 3.0 mm, from the viewpoint of maintaining an appropriate release rate.

A hydrocarbon compound having a high molecular weight may permeate through a tubular container to the surface of the tubular container by using a highly volatile alarm pheromone compound as a diluent. The blending ratio of the hydrocarbon compound to the alarm pheromone compound is preferably from 1: 1 to 1:10. It is more preferable to subject the an ant control agent to aging in a thermostatic bath at a constant temperature of 30° C with a wind speed of 1m/s for 7 to 14 days before installation of the agent, to allow a portion of the hydrocarbon compound to appear on the surface of the tubular container.

When the number of locations for installing the sustained release agents comprising the tubular containers is reduced without changing the release amount per unit area, it is desirable to change the length of each agent, while keeping the filling amount per unit length of the agent unchanged. The length of the sustained release agent comprising the tubular container is preferably from 0.2 to 100 m, more preferably from 0.5 to 20 m, and still more preferably from 1 to 10 m. However, this does not apply to the case where two or more of the sustained release agents comprising tubular containers are connected for use. The filling amount per meter of one sustained release agent comprising a tubular container is preferably from 0.0005 to 100.0 g, more preferably from 0.005 to 5.5 g.

The carrier which the sustained release agent comprises is not particularly limited as long as it is capable of stably holding a compound physiologically active on an ant belonging to the Myrmicinae and capable of releasing the compound for a certain period of time. Examples of the carrier include natural rubbers such as cis-polyisoprene; synthetic rubbers such as isoprene rubber and butadiene rubber; polyolefins such as polyethylene and polypropylene; sodium metasilicate; silica gel; quartz; polylactic acid; polycaprolactone; polyhydroxyalkanoate; polyglycolic acid; polybutylene succinate; modified polyvinyl alcohol; casein; modified starch; polyhydroxyalkanoic acids such as polyhydroxybutyric acid; polysaccharide derivatives such as cellulose and acetylcellulose; and minerals such as zeolite.

The carrier or container which the sustained release agent comprises is not particularly limited as long as it is capable of at least sustainedly releasing the compound hysiologically active on an ant belonging to the Myrmicinae. Examples of the carrier and container include a polymer carrier, a metal carrier, a polymer container and a metal container.

The container may be a sealed or rope-like container comprising such a polymer membrane as at least a part of the container (including the whole of the container) that at least one compound physiologically active on an ant belonging to the Myrmicinae, particularly a highly volatile alarm pheromone compound, can permeate through the polymer membrane to release the compound outside of the container, such as a field, at an appropriate rate. On the other hand, when the container is the spray container made of a material which does not allow a compound physiologically active on an ant belonging to the Myrmicinae to permeate through the spray container, the spray container comprises an opening. The material of the spray container is not particularly limited. Examples of the material include natural rubbers such as cis-polyisoprene; synthetic rubbers such as isoprene rubber and butadiene rubber, and acrylonitrile-butadiene rubber (NBR); polyolefins such as polyethylene and polypropylene; copolymers containing 80% by mass or more of ethylene monomer units such as a ethylene-vinyl acetate copolymer and an ethylene-acrylate copolymer: biodegradable polymers such as polylactic acid, polycaprolactone, polyhydroxyalkanoate and cellulose; polyethylene: polypropylene; polyvinyl acetate; polyvinyl chloride; and polytetrafluoroethylene. The synthetic rubbers, an ethylene-vinyl acetate copolymer and polylactic acid are preferable from the viewpoint of economy and wide applications.

The metal may be any metal that can be used for spraying or dusting. Examples of the metal include aluminum, stainless steel and steel.

The sustained release agent may further comprise an optional oil gelling agent in addition to a compound physiologically active on an ant belonging to the Myrmicinae. Examples of the oil gelling agent include an amino acid derivative, a long-chain fatty acid, a metal salt of a long-chain fatty acid, a sugar derivative and a wax. The oil gelling agent is preferably an amino acid derivative or a long-chain fatty acid from the viewpoint of hydrogen bond strength.

Examples of the amino acid derivative include an acylated form of amino group, and an esterified form and an amidated form of carboxyl group with respect to amino acid having 2 to 15 carbon atoms. Specific examples thereof include N-lauroyl-L-glutamic acid di(cholesteryl/behenyl/octyldodecyl), N-lauroyl-L-glutamic acid di(cholesteryl/octyldodecyl), N-lauroyl-L-glutamic acid di(phytosteryl/behenyl/octyldodecyl), N-lauroyl-L-glutamic acid di(phytosteryl/octyldodecyl), N-lauroyl-L-glutamic acid dibutylamide, and N-ethylhexanoyl-L-glutamic acid dibutylamide.

Examples of the long-chain fatty acid include saturated fatty acids having 8 to 24 carbon atoms such as octanoic acid, 2-ethylhexanoic acid, decanoic acid, lauric acid, myristic acid, stearic acid, palmitic acid, arachidic acid and behenic acid; and unsaturated fatty acids having 8 to 24 carbon atoms such as palmitoleic acid, oleic acid, vaccenic acid, linoleic acid, linolenic acid, arachidonic acid, eicosadienoic acid and erucic acid.

Examples of the metal salt of the long-chain fatty acid include aluminum salts, magnesium salts, manganese salts, iron salts, cobalt salts, calcium salts and lead salts of the above mentioned examples of the long-chain fatty acid.

Examples of the sugar derivative include dextrin fatty acid esters such as dextrin laurate, dextrin myristate, dextrin palmitate, dextrin malgarate, dextrin stearate, dextrin arachate, dextrin lignocerate, dextrin serotinate, dextrin 2-ethylhexanoate palmitate, and dextrin palmitate stearate; sucrose fatty acid esters such as sucrose palmitate, sucrose stearate, and sucrose acetate/stearate; fructooligosaccharide fatty acid esters such as fructooligosaccharide stearate and fructooligosaccharide 2-ethylhexanoate; a benzylidene derivative of sorbitol such as monobenzylidene sorbitol and dibenzylidene sorbitol.

Examples of the wax include haze wax (in which a main component is triglyceride palmitate), Urusi wax (in which a main component is glyceride palmitate), carnauba wax (myricyl cellotate and myricyl alcohol), sugar cane wax (myricyl palmitate), palm wax (myricyl palmitate), beeswax (cellotic acid and myricyl palmitate), whale wax (cetyl palmitate), wool wax (ceryl alcohol and/or myristic acid), and paraffin wax (linear hydrocarbon).

The mixing mass ratio of the compound physiologically active on an ant belonging to the Myrmicinae to the oil gelling agent (mass ratio of compound/oil gelling agent) is preferably from 98:2 to 60:40, more preferably from 95:5 to 70:30, from the viewpoint of cost or release performance.

The hydrogel-like sustained release agent is an agent capable of at least sustainedly releasing at least one compound physiologically active on an ant belonging to the Myrmicinae, particularly an alarm pheromone compound having high volatility, and is not particularly limited as long as it is a hydrogel-like sustained release agent. The hydrogel is made of a hydrophilic polymer and has mechanism of taking in water.

Examples of the hydrophilic polymer include a polymer obtained by polymerization of a polymerizable composition containing at least one vinyl monomer, at least one vinyl macromer, or at least one prepolymer having an ethylenically unsaturated group; and a polymer obtained by polymerization of a polymerizable composition containing at least one silicone vinyl monomer, at least one silicone vinyl macromer, or at least one silicone prepolymer having an ethylenically unsaturated group. Examples of the hydrophilic polymer are not limited to the above two types of polymers, and any crosslinked polymer capable of containing at least 10% by mass of water in its polymer matrix can be used as the hydrophilic polymer.

The vinyl monomer refers to a compound having one ethylenically unsaturated group and being capable of polymerization through a chemical reaction or a thermal reaction.

An ethylenically unsaturated group means any group containing at least one ethylene group. Examples of the ethylenically unsaturated group typically include, but are not limited to, acryloyl (-CO-C(CH₃)=CH₂ and/or -CO-CH=CH₂), allyl, vinyl, styrenyl and other carbon-carbon double bond (C=C)-containing groups.

The hydrogel-like sustained release agent may comprise at least one of the following compounds as an optional preservative and/or an optional mildewcide for protecting against the deterioration by microorganisms such as bacteria. Examples of the preservative include benzoic acid, sodium benzoate, sorbic acid, potassium sorbate, propionic acid, potassium propionate, sodium propionate and ε-poly-L-lysine. Examples of the mildewcide include Imazalil (trademark), o-phenylphenol, sodium o-phenylphenoxide, thiabendazole, fludioxonil and 3-iodo-2-propynyl N-butylcarbamate. For example, an amount of the at least one preservative is preferably from 0 to 5 parts by mass, more preferably from 0 to 1 parts by mass, and an amount of the at least one mildewcide is preferably from 0 to 5 parts by mass, more preferably from 0 to 1 parts by mass, relative to 100 parts by mass of a total amount of the at least one alarm pheromone compound and the at least one hydrocarbon compound having 19 to 50 carbon atoms. The total amount means a total amount of both the alarm pheromone compound(s) and the hydrocarbon compound(s) when both of them are present. It means a total amount of the alarm pheromone compound(s) in the absence of the hydrocarbon compound, and a total amount of the hydrocarbon compound(s) in the absence of the alarm pheromone compound.

Next, there will be described a method for controlling an ant belonging to the Myrmicinae, the method comprises a step of installing a sustained release agent comprising a compound (e.g., an alarm pheromone compound) physiologically active on an ant belonging to the Myrmicinae, and a carrier or a container for sustainedly releasing the compound, in an area (e.g., field) to be controlled to release the compound (e.g., the alarm pheromone compound). As a compound physiologically active on an ant belonging to the Myrmicinae, a hydrocarbon compound having 19 to 50 carbon atoms may also be present in addition to the alarm pheromone compound. The hydrocarbon compound having 19 to 50 carbon atoms is usually non-volatile, but a hydrocarbon compound (liquid or wax) having 19 to 25 carbon atoms has sustained releasability which become weaker as the number of carbon atoms increases. For this reason, even if the hydrocarbon compound having 19 to 25 carbon atoms is present in a sealed container comprising a polymer membrane with respect to a sustained release agent, it can adhere to (and stay on) the surface of the container by permeating through the polymer membrane although depending on the type of polymer membrane. As a result, it can be used fro controlling an ant because the ant attracted to, for example, the alarm pheromone compound, is contacted with the hydrocarbon compound adhering to the surface.

Examples of the ant belonging to the Myrmicinae include leaf cutting ant such as Atta sexdens, Atta laebigata, Atta texana, Atta colombica, Atta bisphaerica, Atta capiguara, Atta cephalotes, Atta goiana, Atta opaciceps, Atta robusta, Atta vollenweideri, Acromyrmex octospinosus, Acromyrmex balzani, Acromyrmex echinator, Acromyrmex niger, Acromyrmex lundii, Acromyrmex ambiguus, Acromyrmex versicor, Acromyrmex striatus, Acromyrmex ameliae, Acromyrmex aspersus, Acromyrmex coronatus, Acromyrmex crassispinus, Acromyrmex diasi, Acromyrmex disciger, Acromyrmex fowleri, Acromyrmex fracticomis, Acromyrmex heyeri, Acromyrmex hispidus, Acromyrmex hystrix, Acromyrmex landolti, Acromyrmex laticeps, Acromyrmex lobicornis, Acromyrmex nigrosetosus, Acromyrmex nobilis, Acromyrmex pubescens, Acromyrmex rugosus and Acromyrmex subterraneus; fire ant (Solenopsis spp.) such as Solenopsis invicta and Solenopsis geminata; and Myrmica spp. such as Myrmica ruginodis, Myrmica rubra and Myrmica scabrinodis. Among these examples, leaf cutting ant and Myrmica spp., each having a ketone compound having 7 to 11 carbon atoms as the alarming pheromone compound, are preferable. Examples of the ant belonging to the Myrmicinae and its alarm pheromone compound are shown in Tables 1 to 2.

**[Table 1]**

| name of insect pest (scientific name) | components of the warning pheromone composition | |
|---|---|---|
| leaf cutting ant (Atta cephalotes) | 2-ethyl-1-hexanol | 3-octanone |
| | 4-methyl-3-heptanone | nonanone |
| | 4-methyl-3-heptanol | |
| leaf cutting ant (Atta colombica) | 2-ethyl-1-hexanol | 3-octanol |
| | 3-octanone | 2-undecanone |
| | 4-methyl-3-heptanone | nonanone |
| | 4-methyl-3-heptanol | 2-heptanone |
| leaf cutting ant (Atta bisphaerica) | 4-methyl-3-heptanone | 2-heptanone |
| leaf cutting ant (Atta capiguara) | 4-methyl-3-heptanone | 2-heptanone |
| leaf cutting ant (Atta sexdens) | 4-methyl-3-heptanone | |
| leaf cutting ant (Atta texana) | 4-methyl-3-heptanone | 2-heptanone |
| leaf cutting ant (Acromyrmex echinatior) | 2-ethyl-1-hexanol | 3-octanol |
| | 3-octanone | 2-nonanone |
| | 2-undecanone | nonanal |
| | nonanone | |
| leaf cutting ant (Acromyrmex octospinosus) | 2-ethyl-1-hexanol | 3-octanol |
| | 3-octanone | 2-nonanone |
| | 2-undecanone | nonanone |
| | octanal | |
| leaf cutting ant (Sericomyrmex amabalis) | 2-ethyl-1-hexanol | 4-methyl-3-heptanone |
| | 4-methyl-3-heptanol | octanal |
| | 4-methyl-3-hexanol | 4-methyl-3-hexanone |
| | 3-heptanone | |
| leaf cutting ant (Apterostiqma pilosum) | 3-octanone | 3,5-dimethyl-2-octanone |
| | 2-methyl-2-heptanal | 2-dodecenal |
| | 1-octen-3-one | 3,4-dimethyl-2-hexanone |
| | 8-methyl-1-undecene | 3,5-dimethyloctanone |

**[Table 2]**

| name of insect pest (scientific name) | components of warning pheromone composition | |
|---|---|---|
| (Myrmica ruginodis) | 3-octanone | 3-octanol |
| (Myrmica sabuleti) | 3-octanone | 3-octanol |
| (Myrmica rugulosa) | 3-octanone | 3-octanol |
| | 6-methyl-3-octanone | |
| (Myrmica schencki) | 3-octanone | 3-octanol |
| (Myrmica rubra) | 3-octanone | 3-nonanone |
| | 3-octanol | |
| (Myrmica scabrinodis) | 3-octanone | 3-octanol |
| | 2-octanol | 3-nonanone |
| (Myrmica lobicornis) | 3-octanone | 3-octanol |
| fire ant (Solenopsis invicta) | 2-ethyl-3,6-dimethylpyrazine | |

Regarding the leaf cutting ant, it is known that Atta spp. has 4-methyl3-heptanone, Acromyrmex spp. has 3-octanone, and Myrmica spp. has 3-octanone as the primary alarm pheromone compound. A species not listed in Tables 1 and 2 but close to these species is considered to have the same alarm pheromone compound so that it is considered to be able to be controlled by the same alarm pheromone compound.

The release of the compound physiologically active on an ant belonging to the Myrmicinae for inducing an attack on the same species or the like into a field is not particularly limited as long as the ant can be controlled. For example, it is desirable to release the compound in active or passive manner using the above-described sustained release agent. Examples of the release in the active manner include release by spraying or dusting from a can, a spray bottle, a sprinkler or an irrigation facility. Example of the release in the passive manner include penetration or (sustained) release from a container, a carrier (or support), hydrogel or the like.

An ant belonging to the Myrmicinae distinguishes the same colony individual from the different colony individual by the component ratio of the body surface hydrocarbon composition, and then an attack and elimination action on the different colony individual is induced. Utilizing this behavior, a combination of at least one alarm pheromone compound of the ant belonging to the Myrmicinae and at least one hydrocarbon compound having 19 to 50 carbon atoms as the compounds for inducing an attack on the same species can be expected to provide more effective control.

The mechanism of the action is not limited to any description in this specification, but can be specifically described as follows, for example. An alarm pheromone compound sustainedly released from the control agent attracts an ant belonging to the Myrmicinae to the control agent, and then the ant attacks the control agent. An ant belonging to the Myrmicinae has a large jaw. Hence, by selecting an appropriate container material, the ant can destroy the control agent. As a result, the hydrocarbon compound contained therein is released and adhere to the body surface of the ant. Then, the component ratio of the body surface hydrocarbon composition of the ant is changed, so that the ant is regarded as an enemy and attacked by the other same species individual nearby inside or outside of the colony, triggered by the contact such as grooming. If this action is caused inside of the colony, it is possible to induce the killing more effectively between the nest mates to reduce the population of the colony.

The control agent may be placed outside of the colony, but it is more effective when placed inside of the colony. In addition, when a solid form of the hydrocarbon compound having 19 to 50 carbon atoms is selected, the solid hydrocarbon compound released from the control agent may coat the passages in the colony and adhere to ants passing therethrough. On the other hand, when a liquid or wax form of the hydrocarbon compound having 19 to 50 carbon atoms is selected, the liquid or wax hydrocarbon compound may be dissolved in a compound for inducing an attack on the same species without adding an additive such as a surfactant.

Also by using an ant control agent comprising a sprayer and at least one hydrocarbon compound having 19 to 50 carbon atoms as a compound physiologically active on an ant belonging to the Myrmicinae for inducing an attack on the same species, the population of the colony can be effectively reduced. In other words, for example, by spraying (including automatic spraying and manual spraying) the hydrocarbon compound having 19 to 50 carbon atoms onto the plant to be protected, the hydrocarbon compound adheres to the leaf of the plant. Leaf cutting ant comes into contact with the hydrocarbon compound attached to the cut leaf during carrying the leaf to the colony or after carrying it to the colony. Then the component ratio of the surface hydrocarbon composition of the ant is changed so that the ant is considered as an enemy and attacked by the other same species individual nearby outside or inside of the colony. As a result, it is possible to effectively induce the killing between the nest mates, thereby reducing the population of the colony.

In addition, for example, by installing the ant control agent at a colony entrance and/or a passage of an ant and spraying (e.g., automatically spraying or manually spraying) the hydrocarbon compound having 19 to 50 carbon atoms, the hydrocarbon compound is directly attached to an ant, and after returning to the colony, the ant is regarded as an enemy and attacked by the same individual as an enemy, thereby effectively inducing killing each other. In this method, a large number of individuals who have been to foraging at outside sites are regarded as enemies and start to kill each other. As a result, the population of the colony may be reduced at once to deteriorate the colony. If the amount of the above-mentioned hydrocarbon compound having 19 to 50 carbon atoms attached to an ant (hereinafter "exposed ant") is too large, there is a possibility that the exposed ant is not regarded as an enemy from a nest mate immediately after returning to the colony. However, the component ratio of the body surface hydrocarbon composition of the other ant which has been in contact with the exposed ant, gradually changes through grooming in the colony, so that killing between the nest mates may be induced as time passes. In other words, the ant which a large amount of hydrocarbon compound has been attached to and which has returned to the colony, can function as a certain type of control agent.

A combination of at least one alarm pheromone compound of an ant belonging to the Myrmicinae with at least one hydrocarbon compound having 19 to 50 carbon atoms may increase the probability of bringing an ant whose component ratio of the body surface hydrocarbon composition has been changed, into contact with a nest mate (another ant in the same colony), because of the effect of the alarm pheromone compound. Consequently, the killing between the nest mates is effectively induced.

A combination of at least one alarm pheromone compound of an ant belonging to the Myrmicinae as a compound for inducing an attack on the same species, with a fungus may bring an effective ant control. In other words, an ant belonging to the Myrmicinae is attracted to the ant control agent by the alarm pheromone compound sustaindedly released from the control agent, and then infected with a fungus. An ant including the ant belonging to the Myrmicinae licks each other's body in the colony, which is called "grooming". For this reason, when the ant infected with a fungi enters the colony, the infection spreads rapidly and the population of the colony can be greatly reduced.

When a combination of at least one alarm pheromone compound of ant belonging to the Myrmicinae with at least one hydrocarbon compound having 19 to 50 carbon atoms as the compound for inducing an attack on the same species, is further combined with a fungus, ants may be effectively controlled. In other words, an ant belonging to theMyrmicinae is attracted to the control agent by the alarm pheromone compound sustaindedly released from the control agent, and then brought into contact with the control agent, resulting in the changed component ratio of the body surface hydrocarbon composition of the ant as well as infection with a fungus. An ant including the ant belonging to the Myrmicinae licks ether other's body in the colony. For this reason, when the ant infected with a fungus enters the colony, the infection spreads rapidly and the population of the colony can be greatly reduced. Consequently, the infection with a fungus in addition to the effect of killing each other can effectively reduce the number of ant individuals.

Examples of the fungus to be used in combination with the compound physiologically active on an ant belonging to the Myrmicinae such as an alarm pheromone compound include filamentous fungi such as Metarhizium, Escovopsis and Beauveria bassiana; and Bacillus subtilis such as Bacillus subtilis var. natto. The fungus may be preferably a filamentous fungus or Bacillus subtilis from viewpoint of the ease of use. Leaf cutting ant belonging to the Myrmicinae eats only mushrooms grown in colony as food, so that if the fungus for cultivating the mushrooms is damaged by the other fungus, then the colony cannot be maintained, leading to the collapse of the colony. Escovopsis is a fungus which exclusively parasites a fungus garden cultivated by leaf cutting ant. It is known that if the Escovopsis invades into the fungus garden of the colony, then the fungus garden is destructively damaged. Bacillus subtilis var. natto has a large effect on a mushroom fungus of leaf cutting ant. Thus, these filamentous fungi and Bacillus subtilis are particularly effective from the viewpoint of ant control. In addition, a virus such as baculovirus may be used in place of the fungus.

The ant control by using the repelling action by the alarm pheromone compound of an ant belonging to the Myrmicinae is also applicable. An ant belonging to the Myrmicinae has different behaviors including attraction, attack and repelling (panic), depending on the concentration of the alarm pheromone compound. In other words, when the concentration of the alarm pheromone compound is low, the alarm compound works as a signal for attraction and attack, and when the concentration is high, it works as a signal for repelling (panic). Accordingly, by installing a sustained release agent or a spray-type agent comprising an alarm pheromone compound of an ant belonging to the Myrmicinae as the compound for inducing an attack on the same species to a plant to be protected, and keeping the concentration of the compound higher than or equal to a certain concentration, the plant can be protected from the ant belonging to the Myrmicinae. For example, eucalyptus leaves can be protected from the leaf cutting ant belonging to the Myrmicinae by installing the control agent to the eucalyptus. Thus, the control agent is effective.

When at least one alarm pheromone compound of an ant belonging to the Myrmicinae is used in combination with at least one hydrocarbon compound having 19 to 50 carbon atoms, the alarm pheromone compound is first released from the control agent and the most of the hydrocarbon compound remains in the control agent because of the difference in volatility, although depending on the material of the container or carrier of the control agent. In this situation, when the concentration of the alarm pheromone compound released from the control agent is high, the plant is protected from the ant which detects the signal of repelling (panic). On the other hand, when the concentration becomes low, the ant is attracted to and attack the control agent. When the ant attacks the control agent, the hydrocarbon compound having 19 to 50 carbon atoms is released or exposed. Then the ant to which the hydrocarbon compound has been attached will be subjected to being killed or killing (i.e., killing each other) after returning to the colony. In other words, it is not necessary to specify the colony of an ant belonging to the Myrmicinae for installing a control agent. It is sufficient to simply install a control agent containing a compound physiologically active on the ant belonging to the Myrmicinae to a plant to be protected, so that the control agent works as a repellent at the early stage of installation and then works as an agent for killing each other at the later stage of installation.

By installing in a colony a sustained release agent comprising at least one alarm pheromone compound of an ant belonging to the Myrmicinae as a repelling (panic) compound, the ants present in the colony may be expelled from the colony. For example, leaf cutting ant, which is a species belonging to the Myrmicinae, requires a mushroom fungus for species survival, and most of the fungi cultivated by an evolutionarily developed fungus-growing ant belong to Lepiota cristata (in particular, Leucoagaricus leucothites and Leucocoprinus cepistipes). These fungi have been found only in the nest of leaf cutting ant. A queen leaf cutting ant takes a small amount of filaments of the fungus growing in the colony into the mouth before the marriage flight and uses them as a strain to create a new nest. Thus, the fungus garden of leaf cutting ant spreads only by vertical propagation between consanguineous colonies, so that once the colony loses the fungus garden, it cannot survive any longer. When the alarm pheromone compound, which is a signal for the abnormal condition, is continuously released for a certain period of time, the queen ant in the colony will evacuate from the colony without any time for taking out the fungus of the mushroom. For this reason, a new colony cannot be formed after the evacuation. Consequently, the colony can be collapsed.

By installing a sustained release agent comprising at least one alarm pheromone compound of an ant belonging to the Myrmicinae and at least one hydrocarbon compound having 19 to 50 carbon atoms in combination, not only the above-described repelling effect of the alarm pheromone compound, but also the kill-or-be-killed effect is expected inside or outside of the colony. The kill-or-be-killed effect is brought by the following reasons. An ant attracted to the lowered concentration of the alarm pheromone compound can be brought into contact with the sustained release agent so that the hydrocarbon compound having 19 to 25 carbon atoms having sustained releasability can be attached to the ant. Alternatively, the alarm pheromone compound induces an attack on the same species so that the ant destroys the sustained release agent and the hydrocarbon compound can be attached to the ant.

By installing a sustained release agent comprising at least one alarm pheromone compound of an ant belonging to the Myrmicinae as a compound for inducing an attack on the same species around the colony on the ground surface, the worker ant out for foraging may be inhibited from returning to the colony. For example, inhibiting leaf cutting ant belonging to the Myrmicinae from returning the colony results in the slowdown of supplying leaves for growing mushrooms, so that nutrients cannot spread into the ants in the colony, thereby leading the colony to decay. In addition, the ant stays outside of the colony for a longer period of time so that the probability of encountering and fighting with an army ant such as Eciton burchellii parvispinum increases, thereby reducing the number of the ant individuals and leading the colony to decay.

By installing a sustained release agent comprising at least one alarm pheromone compound of an ant belonging to the Myrmicinae and at least one hydrocarbon compound having 19 to 50 carbon atoms around a colony, the above-described effect of the high concentration of the alarm pheromone compound can be obtained by sensing the signal of repelling (panic). On the other hand, when the concentration of the alarm pheromone compound becomes low, an ant is attracted to the the alarm pheromone compound and attacks the sustained release agent. When the ant attacks the sustained release agent, the hydrocarbon compound having 19 to 50 carbon atoms is released or exposed so that the ant to which the hydrocarbon compound has been attached will be subjected to being killed or killing (i.e., killing each other) after returning to the colony. In other words, when the concentration of the alarm pheromone compound of an ant belonging to the Myrmicinae becomes low, the sustained release agent works as a control agent for killing each other.

For such an application, it is important to sustainedly release the alarm pheromone compound from the control agent for a certain period of time. Thus, it is desirable to avoid releasing the alarm pheromone compound all at once from the control agent after the agent is destroyed by the ant attack. In order to achieve such a purpose, it is preferable to gelate the content liquid containing the alarm pheromone compound in advance. After the content liquid is gelated, even if the control agent is cut off by an ant belonging to the Myrmicinae, the alarm pheromone compound can be continuously released from each cut-off piece of the control agent, thereby bringing the effective result. When a sustained release agent is installed around a colony on the ground surface, it is desirable to cover the entire colony and securely cover the entrance and exit of the colony from the viewpoint of the control effect. For this reason, it is preferable to use a rope-like sustained release agent.

There may be used a control agent (not a sustained release agent) comprising a biodegradable material in place of the material which a container or carrier of a sustained release agent is made of. The control agent is carried into the colony by the ant itself, and then a compound for inducing an attack on the same species is released into the colony from the control agent as the biodegradation progresses after a certain period of time. This is economical because the ant itself carry the control agent to the deep inside of the colony. For example, by allowing the leaf cutting agent belonging to the Myrmicinae to carry the control agent into a room of cultivating a mushroom, a compound for inducing an attack on the same species, such as an alarm pheromone compound, may be exposed to a food storage so that the cultivation of the mushroom is interrupted, thereby leading to the depletion of food and then the collapse of colony.

The ant control agent of the present application is preferably not used together with an insecticide. In other words, the present control agent induces an attack on the same species to reduce the number of ants in a colony. If an ant attracted to an alarm pheromone compound is killed by an insecticide, then there is no longer individual ant which attacks the same species. Consequently, the number of individuals cannot be reduced by killing each other, and the the colony cannot be decayed. Thus, it is important with respect to the application of the present control agent to allow an ant to return to the colony without being killed by the insecticide. For this purpose, it is preferable not to combine the present control agent with the insecticide.

As described above, an ant belonging to the Myrmicinate including leaf cutting ant, which is an important forest pest of eucalyptus in North, Central and South America, can be effectively controlled.

The present ant control agent and ant control method, that is, the ant control agent for reducing the number of ant individuals by inducing killing each other and the ant control method using the ant control agent, can also be applied to ants not belonging to the Myrmicinae and having an alarm pheromone and/or a body surface hydrocarbon composition in the same manner as the ant belonging to the Myrmicinae. They can also be applied to bees reported to distinguish the nest mates in the same colony from the other bees in the different colony based on body surface hydrocarbons.

### Examples

Hereinafter, the invention will be more specifically described with reference to Examples. However, it should not be construed that the invention is limited to or by Examples.

### <Bioassay for selection of odor source>

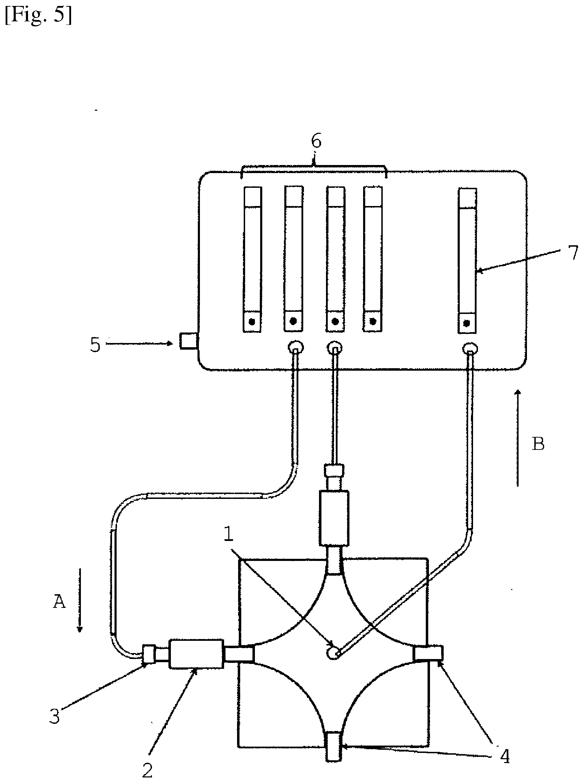

Bioassays were performed using the worker ants of Myrmica ruginodis which had been collected in Niigata Prefecture in Japan. The bioassays were performed using only two arms of a four-arm olfactometer (classic 4-Choice Arena Orfactometer, Sigma Scientific LLC) as shown in Fig. 5. Pure air filled in a 47L gas cylinder was used as an air source, and the air flow rate was adjusted by a regulator. Each arm of the olfactometer had an air flow of 0.3L/min, and the air flowing into the central arena is discharged from the insect inlet in the center of the arena. The ants were used as each group consisting of 10 ants, the test was started at the time of entering the ants from the inlet 1, and the selection for the odor source was made for a maximum of 5 minutes per repetition. The choice of odor source was determined by counting the number of ants in the insect separation chamber 2 at the end of the test. Five minutes after the start of the experiment, and when all 10 ants selected any one of odor sources, the results were recorded, and the tested ants were removed. Then three repetitions (using a total of 30 ants) of experiments were performed. Each cotton swab serving as an odor source was installed in each odor source installation adapter 3, and was replaced with a new one at every repetition. The glassware was washed after each repetition, and the odor source installation adapter for installing an odor source in the olfactometer was selected randomly. The olfactometer includes a stopper 4, a pure air supply port 5, an air supply flow meter 6, and a discharge flow meter 7. Supply air flow A and discharge air flow B are also shown in Fig. 5.

### Example 1

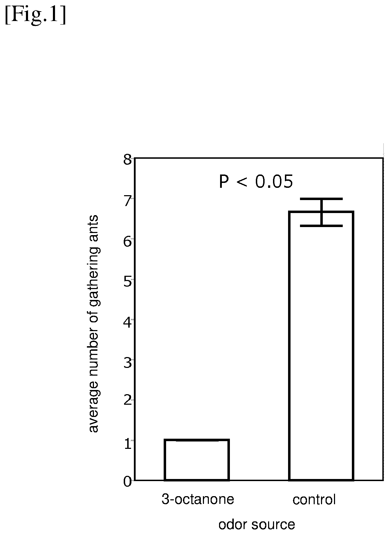

A bioassay was performed by installing a cotton swab containing 7.6 mg of mixture, i.e., 3-octanone diluted in distilled water in the presence of the surfactant t-octylphenoxypolyethoxyethanol (Triton X-100), in an alarm pheromone compound treatment section, and installing a cotton swab soaked in the same amount of distilled water in a control section. As a result, the number of ants collected for the odor source is shown in Fig. 1. It is statistically significant that the ants of Myrmica ruginodis gathered in the control section, while avoiding the alarm pheromone compound treatment section with the alarm pheromone compound 3-octanone. By treating a plant to be protected with an ant control agent which releases a certain amount of alarm pheromone compound, the ants belonging to the Myrmicinae can escape from the treatment section, thereby protecting the plant.

### Example 2

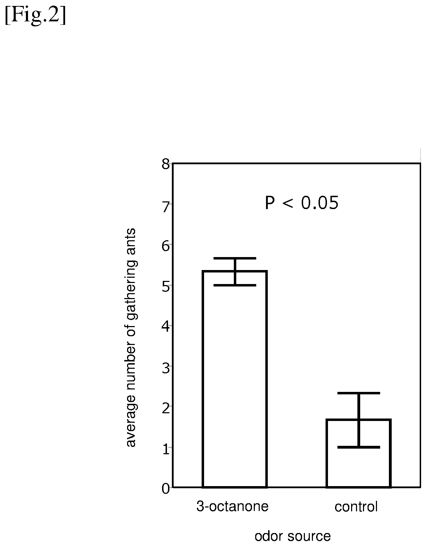

A bioassay was performed by installing a cotton swab containing 1.1 mg of mixture, i.e., 3-octanone diluted with distilled water in the presence of the surfactant t-octylphenoxypolyethoxyethanol (Triton X-100), in an alarm pheromone compound treatment section, and installing a cotton swab soaked in the same amount of distilled water in a control section. As a result, the number of ants collected for the odor source is shown in Fig. 2. It is statistically significant that the ants of Myrmica ruginodis gathered in the alarm pheromone compound treatment section with the alarm pheromone compound 3-octanone. By lowering the concentration of the alarm pheromone compound, the ants belonging to the Myrmicinae can be attracted to the alarm pheromone.

### <Bioassay for Change of Component Ratio of Body Surface Hydrocarbon Composition>

A bioassay was performed using the worker ants of Myrmica ruginodis which had been collected in Niigata Prefecture in the same manner as in Example 1. An arena having gypsum laid in the round case was prepared, and 10 worker ants collected from the same nest as the nest mates, were introduced to the arena. The peripheral edge of the arena is coated with liquid Teflon (registered trademark) so that the ants cannot escape from the arena during observation. One of the ten ants was partly coated with an aqueous hydrocarbon solution, and the interaction with the other nest mates was observed for 2 minutes. During the observation, the interactions (i.e., communications) between nest mates was categorized into the following five stages.
1. Contact with the other body using the antennae,
2. Open the jaw for intimidation,
3. A short bite (less than 10 seconds) of a part of the body,
4. A long bite (10 seconds or more) of a part of the body, and
5. One ant simultaneously bitten by two or more ants.

The number of each generated interaction in the five categories was counted, and the aggression index was calculated from the obtained number using the following equation: Aggression index = (total number of interactions in categories 3, 4, and 5) / (total number of interactions in categories 1, 2, 3, 4 and 5)

Three repetitions, each repetition including the hydrocarbon coating treatment and the control treatment, were performed, and a total of 60 ants were used.

### Example 3

A small brush containing 2.0 mg of mixture, i.e., liquid-paraffin diluted with distilled water in the presence of the surfactant polyoxyethylene sorbitan monolaurate (Tween 20), was applied onto the thoracic dorsal plate of ant. In the control section, a solution having only a surfactant dissolved was applied.

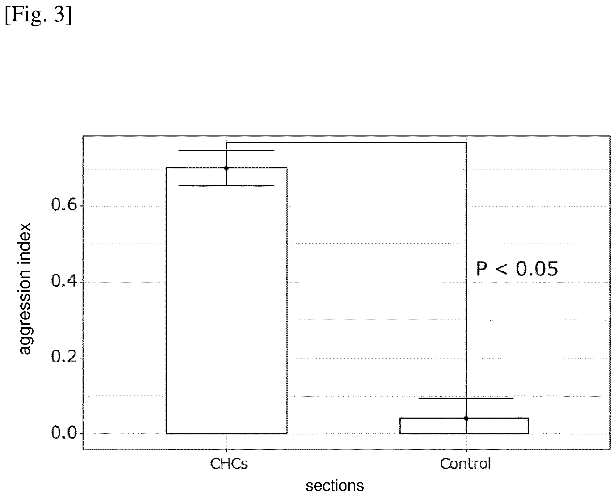

As a result, the comparison between the liquid paraffin treatment section and the control section is shown in Fig. 3. The ant partly coated with the diluted solution of liquid paraffin was subjected to hostile interactions in category 3 or more from the nest mates, and finally killed by the nest mates in the experiment with the highest aggression index among three repetitions. The ant partly coated with the solution having only a surfactant dissolved hardly had such interactions and there were statistically significant differences in the aggression index between the treatment section and the control section. It was further observed that another ant which had attacked the ant coated with liquid paraffin was gradually subjected to hostile interactions from the other nest mates. This is considered to be caused by the changed component ratio of the body surface hydrocarbon composition during the attack on the ant coated with liquid paraffin. Thus, it is also considered that chained killings can be induced in the colony in which many ants exist. Liquid paraffin (CHCs) was used as a hydrocarbon compound having 19 to 50 carbon atoms.

### Example 4

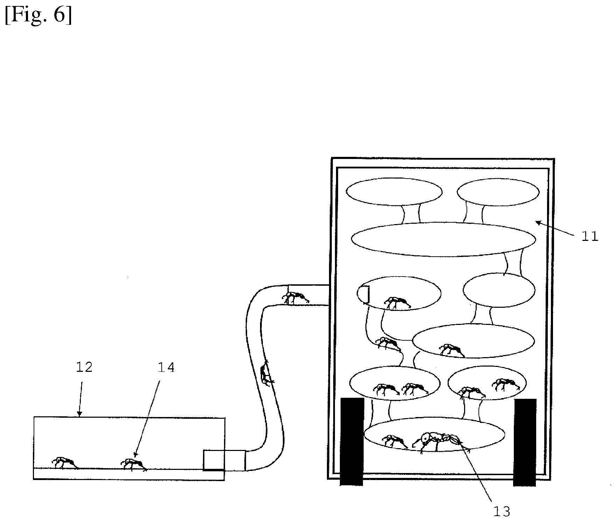

Ant control tests were carried out using a colony of about 100 ants of Myrmica ruginodis collected in Niigata Prefecture in the same manner as in Example 1. In the ant control tests, Ant Machine No. 2 Mini (produced by Antroom Co., Ltd.) having a colony 11 made of gypsum and a plastic container 12 was used as a test apparatus as shown in Fig. 6. A queen ant 13 and working ants 14 are also shown in Fig. 6. A sucrose solution was periodically given as a bait in the plastic container 12, which was used as a foraging area for the ants.

For three days after ants were entered into a new colony of gypsum, no treatment was performed as a control, behavioral observations were made, and the number of dead ants were counted. Subsequently, a small brush containing a mixture i.e., liquid-paraffin and (9Z)-9-nonacosene diluted with distilled water in the presence of the surfactant polyoxyethylene sorbitan monolaurate (Tween 20), was applied onto the thoracic dorsal plate of one ant selected from the same colony. The behavioral observations were made and the number of dead ants was counted for the next three days. As a result, neither aggressive behaviors nor mutual attacks were observed within the same colony and the number of dead ants was 0 for 3 days in the control section (i.e., the control period). On the other hand, the treated ant was immediately bitten by another ant, then worker ants came out from the colony one after another, and act of killing each other happened in a chained manner in the control section (i.e., the control period). As a result, the number of dead ants for 3 days was 7. In the treatment section (i.e., treatment period), when the two ants were attacking each other, the foraging area and the colony were filled with the alarm pheromone released from the bitten ant, thereby attracting the other ants in the colony. Since the component ratio of the body surface hydrocarbon composition of the ant which bit the treated ant was also changed, it is considered that the other ants coming out of the colony recognized these two ants as non-nestmates to develop further killing, and such a scheme of the development of killing was repeated to spread killing into a large scale. It is considered from these results that the treatment of a few ants in the same colony can induce a chain-like killing, thereby bringing the effective ant control.

In the above test, only the worker ants working outside the colony and participating in the defense of colony are dead. Since many worker ants are subjected to hydrocarbon treatment in actual field treatment, a larger number of ants are likely to die from killing each other.

### Explanation of Symbols

1: ant inlet
2: insect separation chamber
3: odor source installation adapter
4: stopper
5: pure air supply port
6: air supply flow meter
7: discharge flow meter
11: gypsum colony
12: plastic container
13: queen ant
14: working ant
A: supply air flow
B: discharge air flow

## Claims

1. A composition comprising:
at least one alarm pheromone compound contained in an alarm pheromone composition of an ant belonging to Myrmicinae,
at least one hydrocarbon compound having 19 to 50 carbon atoms and being physiologically active on the ant.

2. The composition according to claim 1, wherein the hydrocarbon compound is at least one contained in a hydrocarbon composition present on a body surface of the ant.

3. The composition according to claim 1 or 2, wherein the alarm pheromone compound is at least one selected from the group consisting of a ketone compound having 7 to 11 carbon atoms and an alcohol compound having 7 to 11 carbon atoms.

4. The composition according to any one of claims 1 to 3, wherein the alarm pheromone compound is 3-octanone and/or 4-methyl-3-nonanone.

5. The composition according to any one of claims 1 to 4, wherein the hydrocarbon compound is selected from the group consisting of nonadecane, (9Z)-9-nonadecene, icosane, henicosane, docosane, tricosane, tetracosane, pentacosane, hexacosane, heptacosane, octacosane, nonacosane, triacontane, hentriacontane, 9-methyltriacontane, dotriacontane, 9-methylhentriacontane, 7,11-dimethyltriacontane, tritriacontane, 9-methyldotriacontane, 3,5-dimethylhentriacontane, 3,7,11-trimethyltriacontane, 3,7,11-trimethyldotriacontane, tetratriacontane, 9-methyltritriacontane, 3,7,11-trimethylhentriacontane, pentatriacontane, 4,8,12-trimethyldotriacontane, hexatriacontane, 3,7,11-trimethyltritriacontane, 4,8,12-trimethyltritriacontane, 3,7,11-trimethyltetratriacontane, heptatriacontane, 4,8,12-trimethyltetratriacontane, octatriacontane, 3,7,11-trimethylpentatriacontane, 4,8,12-trimethylpentatriacontane, nonatriacontane, 4,8,12-trimethylhexatriacontane, tetracontane, hentetracontane, 7,11-dimethylnonatriacontane, dotetracontane, tritetracontane, tetratetracontane, pentatetracontane, hexatetracontane, heptatetracontane, octatetracontane, nonatetracontane and pentacontane.

6. An agent for controlling an ant belonging to Myrmicinae, the agent comprising:
the composition according to any one of claims 1 to 5, and
a container containing the composition therein or a carrier carrying the composition.

7. The agent according to claim 6, comprising the container which is a closed container, wherein at least a part of the container comprises such a polymer membrane that the alarm pheromone compound can permeate through the membrane.

8. The agent according to claim 6, comprising the container which is an aerosol sprayer for generating an aerosol of the composition.

9. The agent according to any one of claims 6 to 8, comprising no insecticidal component.

10. A method for controlling an ant belonging to Myrmicinae, by using the agent according to any one of claims 6 to 9.

11. The method according to claim 10, comprising a step of installing the agent in an area or field to be protected from the ant, around an object to be protected from the ant, or around a colony of the ant, to release the alarm pheromone compound from the container.

12. The method according to claim 10, comprising steps of:
installing the agent of claim 7 in an area or field to be protected from the ant to release the alarm pheromone from the container; and
bringing the ant into contact with a surface of the container on which the hydrocarbon compound having permeated through the polymer membrane is present, or allowing the ant to break the container, so as to attach the hydrocarbon compound to the ant.

13. The method according to claim 10, comprising a step of spraying the composition from the agent of claim 8 into a colony of the ant to bring the ant into contact with the composition.

14. The method according to any one of claims 10 to 13, wherein no insecticide is used.

15. A agent for controlling an ant, the agent comprising:
at least one compound for inducing an attack by an ant belonging to Myrmicinae on the same species, or repelling the ant; and
a container containing the compound or a carrier carrying the compound.

16. The agent according to claim 15, wherein the compound is at least one alarm pheromone compound contained in an alarm pheromone composition of the ant, and/or at least one hydrocarbon compound having 19 to 50 carbon atoms and being physiologically active on the ant.

17. The agent according to claim 16, wherein the hydrocarbon compound is at least one hydrocarbon compound contained in a hydrocarbon composition present on a body surface of the ant.

18. The agent according to claim 16, wherein the compound is the alarm pheromone compound and is at least one selected from the group consisting of a ketone compound having 7 to 11 carbon atoms and an alcohol compound having 7 to 11 carbon atoms.

19. The agent according to any one of claims 15 to 18, comprising the container which is an aerosol sprayer for generating an aerosol of the compound.

20. The agent according to any one of claims 15 to 18, comprising the container, wherein the at least one compound is the alarm pheromone compound and the hydrocarbon compound, or the alarm pheromone compound; and
the container is a closed container, and at least a part of the container comprises such a polymer membrane capable of allowing the alarm pheromone compound to penetrate through the membrane.

21. The agent according to any one of claims 15 to 20, wherein the ant is a leaf cutting ant.

22. The agent according to any one of claims 15 to 21, comprising no insecticidal component.

23. A method for controlling an ant belonging to Myrmicinae by using the agent according to any one of claims 15 to 21.

24. The method according to claim 23, wherein the agent comprises the alarm pheromone compound, and the method comprises a step of installing the agent in an area or field to be protected from the ant, around an object to be protected from the ant, or around a colony of the ant, to release the alarm pheromone compound from the container or carrier.

25. The method according to claim 23, wherein the agent comprises the container which is a sprayer, and the method comprises a step of spraying the compound from the agent into a colony of the ant to bring the ant into contact with the compound.

26. The method according to any one of claims 23 to 25, wherein no insecticide is used.
